Europäisches Patentamt

European Patent Office

Office européen des brevets

(11) Veröffentlichungsnummer: **0 203 460**
**A1**

(12) # EUROPÄISCHE PATENTANMELDUNG

(21) Anmeldenummer: **86106560.5**

(22) Anmeldetag: **14.05.86**

(51) Int. Cl.⁴: **G 01 P 3/46**

(30) Priorität: **30.05.85 DE 3519417**

(43) Veröffentlichungstag der Anmeldung: **03.12.86**
**Patentblatt 86/49**

(84) Benannte Vertragsstaaten: **DE FR GB IT**

(71) Anmelder: **Siemens Aktiengesellschaft Berlin und München, Wittelsbacherplatz 2, D-8000 München 2 (DE)**

(72) Erfinder: **Mainberger, Klaus, Neulandstrasse 7, D-8741 Hohenroth (DE)**
Erfinder: **Schneider, Wolfgang, Dipl.-Ing., Buttlarstrasse 37, D-6400 Fulda (DE)**

(54) **Kollektorloser Tachogenerator.**

(57) Die Erfindung betrifft einen kollektorlosen Tachogenerator mit einem dauermagneterregten Läufer (1) und einer mehrphasigen Ständerwicklung (5), die mit einer elektronischen, durch magnetfeldempfindliche Rotorlagegeber (9) gesteuerten Kommutierungseinrichtung verbunden ist. Eine hohe Spannungsgenauigkeit läßt sich trotz einfachem mechanischem Aufbau des Tachogenerators dadurch erzielen, daß die Spulen ($U_1$ bis $U_3$, $V_1$ bis $V_3$, $W_1$ bis $W_3$) der Ständerwicklung (5) auf einem aus amagnetischem Material bestehenden Träger (4) angeordnet sind, der mit dem Rückschlußjoch (6) des Ständers verbindbar ist, daß sich das Rückschlußjoch (6) und die Dauermagnete (2) mindestens auf einer Seite in axialer Richtung über den Wickelkopf (7) der Ständerwicklung (5) hinaus erstrecken und die Rotorlagegeber (9) vor dem betreffenden Wickelkopf (7) im Luftspalt (8) zwischen dem Rückschlußjoch (6) und den Dauermagneten (2) des Läufers angeordnet sind, daß ferner an dem Träger (4) Abstützelemente (16, 19) vorgesehen sind, durch die für jede Spule ($V_1$ bis $V_3$ bzw. $W_1$ bis $W_3$) eine gleichlange Ausbildung der beiden induzierten Spulenseiten (14, 15 bzw. 17, 18) sichergestellt ist.

Siemens Aktiengesellschaft     Unser Zeichen
Berlin und München             VPA **85** P **3 1 8 5** E

## Kollektorloser Tachogenerator

Die Erfindung betrifft einen kollektorlosen Tachogenerator mit einem dauermagneterregten Läufer und einer mehrphasigen Ständerwicklung, die mit einer elektronischen, durch magnetfeldempfindliche Rotorlagegeber gesteuerten Kommutierungseinrichtung verbunden ist.

Der Erfindung liegt die Aufgabe zugrunde, einen solchen Tachogenerator konstruktiv so auszubilden, daß er leicht herstellbar ist und trotzdem die für eine exakte Regelung erforderliche Spannungsgenauigkeit besitzt.

Die Lösung der gestellten Aufgabe gelingt nach der Erfindung dadurch, daß die Spulen der Ständerwicklung auf einem aus amagnetischem Material bestehenden Träger angeordnet sind, der mit dem Rückschlußjoch des Ständers verbindbar ist, daß sich das Rückschlußjoch und die Dauermagnete mindestens auf einer Seite in axialer Richtung über den Wickelkopf der Ständerwicklung hinaus erstrecken und die Rotorlagegeber vor dem betreffenden Wickelkopf im Luftspalt zwischen dem Rückschlußjoch und den Dauermagneten des Läufers angeordnet sind, daß ferner an dem Träger Abstützelemente vorgesehen sind, durch die für jede Spule eine gleichlange Ausbildung der beiden induzierten Spulenseiten sichergestellt ist. Die Spulen können außerhalb des Rückschlußjoches auf den Träger aufgewickelt werden, der dann z.B. bei einem Tachogenerator mit Innenläufer in das den Läufer umgebende Rückschlußjoch eingesetzt wird. Die Rotorlagegeber werden durch die entsprechende axiale Verlängerung des Läufers und des Rückschlußjoches durch die Dauer-

M1 2 Th / 24.05.1985

0203460

magnete des Läufers beeinflußt, so daß keine gesonderten Dauermagnete für die Rotorlagegeber erforderlich sind. Die axiale Verlängerung des Rückschlußjoches und Läufers bringt darüberhinaus den Vorteil, daß die wirksame Länge der der Induktion durch das Magnetfeld ausgesetzten Spulenseiten vergrößert wird. Durch den Wickelkopf bedingte Längenunterschiede der beiden betroffenen Spulenseiten werden durch entsprechende am Träger vorgesehene Abstützelemente ausgeglichen.

Nach einer Ausgestaltung der Erfindung wird eine einfache Herstellung der Ständerwicklung und die Einhaltung von gleichen Längen der induzierten Spulenseiten dadurch ermöglicht, daß am Umfang des Trägers radial vorstehende, entsprechend der erforderlichen Spulenweite voneinander beabstandete Stege vorgesehen sind, um die die einzelnen Spulen herumgewickelt sind, daß ferner mindestens auf der im Luftspalt liegenden Wickelkopfseite an den Stirnseiten der Stege die Länge der jeweiligen Spulenseite bestimmende Vorsprünge ausgebildet sind.

Je nach Art der Bewicklung des Trägers können die induzierten Spulenseiten der zu verschiedenen Phasen gehörenden Spulen unterschiedliche Längen aufweisen. Dies führt zu unterschiedlich hohen Spannungen der einzelnen Phasen. Gleiche Spannungen in allen Phasen lassen sich dadurch erreichen, daß die Windungszahl der zu einer Phase gehörenden Spulen zu der Windungszahl der zu einer anderen Phase gehörenden Spulen im umgekehrten Verhältnis wie die Länge der induzierten Spulenseiten der zu der einen Phase gehörenden Spulen zu der Länge der induzierten Spulenseiten der zu der anderen Phase gehörenden Spulen steht.

0203460

Anhand eines in der Zeichnung dargestellten Ausführungsbeispieles wird der Anmeldungsgegenstand nachfolgend näher beschrieben. Es zeigt:

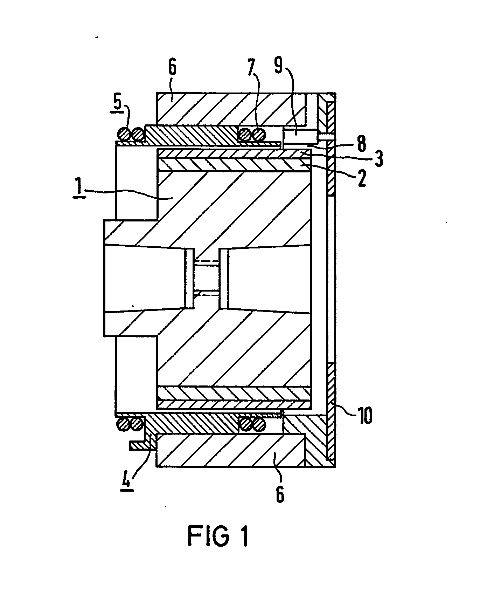

Fig. 1   einen Tachogenerator im Schnitt

Fig. 2   die auf einem amagnetischen Träger angeordnete Ständerwicklung in abgewickelter Darstellung.

Mit 1 ist der Läufer eines Tachogenerators bezeichnet, an dessen Umfang Dauermagnete 2 angeordnet sind, die durch eine sie umschließende Hülle 3 auf dem Läufer gehalten werden. Auf einem als Hohlzylinder ausgebildeten Träger 4 aus Kunststoff ist die Ständerwicklung 5 angeordnet. Der Träger 4 ist in das den Läufer 1 umschließende Rückschlußjoch 6 des Ständers eingesetzt. Das Rückschlußjoch 6 und die Dauermagnete 2 des Läufers 1 erstrecken sich auf einer Seite in axialer Richtung über den betreffenden Wickelkopf 7 der Ständerwicklung 5 hinaus. In dem vor dem Wickelkopf 7 zwischen dem Rückschlußjoch 6 und den Dauermagneten 2 bestehenden Luftspalt 8 sind in der Polteilung des Tachogenerators entsprechendem Abstand Hallschalter 9 als magnetfeldempfindliche Elemente angeordnet. Die Hallschalter 9 werden von einer mit dem Ständer des Tachogenerators verbundenen Leiterplatte 10 getragen. Von dieser Leiterplatte führen Verbindungsleitungen zu der in der Zeichnung nicht dargestellten elektronischen Kommutierungseinrichtung. Die Leiterplatte kann je nach Bedarf mit Ableichwiderständen bestückt werden, durch die ein Feinabgleich der in den Ständerwicklungen induzierten Phasenspannungen möglich ist.

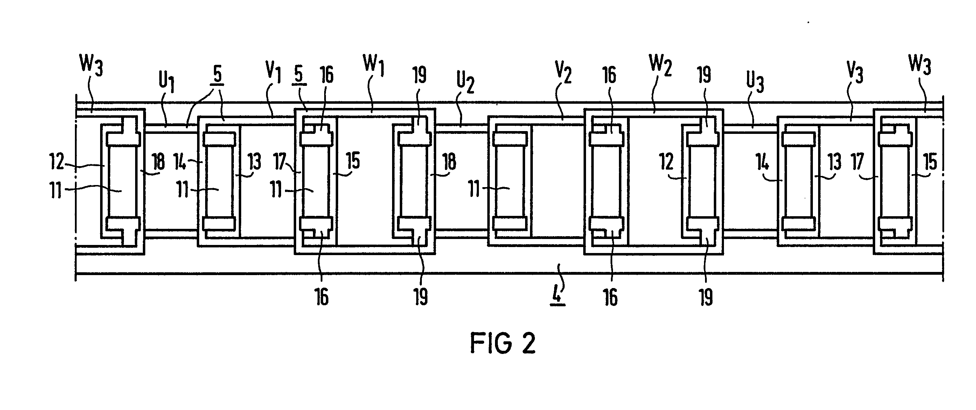

Wie die Fig. 2 zeigt, ist die Ständerwicklung 5 dreiphasig ausgeführt. Die zur Phase U gehörenden Spulen sind mit $U_1$, $U_2$, $U_3$, die zur Phase V gehörenden Spulen

mit $V_1$, $V_2$, $V_3$, und die zur Phase W gehörenden Spulen mit $W_1$, $W_2$, $W_3$ bezeichnet. An dem Träger 4 sind im Abstand der gewünschten Spulenweite radial abstehende Stege 11 angeformt, um die die Spulen herumgewickelt werden. Beim Wickeln der Ständerwicklung werden zunächst die Spulen $U_1$ bis $U_3$ der Phase U hintereinander auf den Träger 4 gewickelt. Die sich axial erstreckenden, durch das Läufermagnetfeld induzierten Spulenseiten 12 und 13 der Spulen $U_1$ bis $U_3$ liegen auf gleichem Niveau. Nach dem Wickeln der Spulen $U_1$ bis $U_3$ folgt das Wickeln der Spulen $V_1$ bis $V_3$. Diese Spulen werden mit ihrer einen Spulenseite 14 über die bereits auf den Träger 4 aufgebrachten Spulen $U_1$ bis $U_3$ gewickelt. Dies bringt eine Verlängerung der Spulenseiten 14 der Spulen $V_1$ bis $V_3$ gegenüber den Spulenseiten 12 bzw. 13 der Spulen $U_1$ bis $U_3$. Außerdem ist die Spulenseite 14 der Spulen $V_1$ bis $V_3$ länger als der Steg 11, so daß die andere Spulenseite 15 der Spulen $V_1$ bis $V_3$ bei bloßer Anlage an dem Steg 11 kürzer wäre als die Spulenseite 14. Diese ungleiche Länge der Spulenseiten 14 und 15 würden zu einem dachförmigen Verlauf der in den Spulen $V_1$ bis $V_3$ induzierten Spannung führen. Damit die Spulenseite 15 der Spulen $V_1$ bis $V_3$ die gleiche Länge wie die Spulenseite 14 erhält, sind an den entsprechenden Stegen 11 axial gerichtete Vorsprünge 16 angeformt, die in radialer Richtung jeweils auf dem entsprechenden Niveau der betreffenden Spulen an den Stegen 11 vorgesehen sind.

Nach dem Wickeln der Spulen $V_1$ bis $V_3$ erfolgt zur Vervollständigung der Ständerwicklung 5 noch das Wickeln der Spulen $W_1$ bis $W_3$. Mit ihrer Spulenseite 17 liegen die Spulen $W_1$ bis $W_3$ über den Spulen $V_1$ bis $V_3$. Somit ergibt sich für die Spulenseite 17 der Spulen $W_1$ bis $W_3$ gegenüber den Spulenseiten 14 bzw. 15 der Spulen $V_1$ bis $V_3$ wiederum eine größere Länge. Damit die zweite Spulen-

seite 18 der Spulen $W_1$ bis $W_3$ die gleiche Länge wie die Spulenseiten 17 erhält, sind an den entsprechenden Stegen 11 weitere axial gerichtete Vorsprünge 19 angeformt, die so bemessen sind, daß die zweite Spulenseite 18 die gleiche axiale Länge wie die über die Spulen $V_1$ bis $V_3$ gewickelte Spulenseite 17 der Spulen $W_1$ bis $W_3$ erhält.

Durch die Vorsprünge 16 und 19 an den entsprechenden Stegen 11 wird sichergestellt, daß die Spulenseiten 14 und 15 der Spulen $V_1$ bis $V_3$ und die Spulenseiten 17 und 18 der Spulen $W_1$ bis $W_3$ gleichlang sind und somit die in diesen Spulen induzierte Spannung einen trapezförmigen Verlauf aufweist.

Die unterschiedliche Länge der induzierten Spulenseiten der zu verschiedenen Phasen gehörenden Spulen führt zu unterschiedlich hohen Phasenspannungen. Eine Angleichung der drei Phasenspannungen ist dadurch möglich, daß die Spulen $V_1$ bis $V_3$ und $W_1$ bis $W_3$ gegenüber den Spulen $U_1$ bis $U_3$ mit unterschiedlicher Windungszahl ausgeführt werden. Hierbei müssen sich die Windungszahlen der Spulen von den betreffenden Phasen z.B. den Phasen U und V umgekehrt wie die Längen der induzierten Spulenseiten 12, 13 und 14, 15 der betreffenden Spulen $U_1$ bis $U_3$ und $V_1$ bis $V_3$ verhalten. D.h., die Spulen $V_1$ bis $V_3$ deren induzierten Spulenseiten 14 und 15 länger sind als die induzierten Spulenseiten 12 und 13 der Spulen $U_1$ bis $U_3$ erhalten somit eine kleinere Windungszahl. Dementsprechend werden auch die Spulen $W_1$ bis $W_3$, deren induzierte Spulenseiten 17 und 18 ebenfalls länger sind als die induzierten Spulenseiten 12 und 13 der Spulen $U_1$ bis $U_3$ mit einer entsprechend kleineren Windungszahl ausgeführt.

Der beschriebene Tachogenerator liefert somit trotz seines einfachen mechanischen Aufbaues eine drehzahlabhängige Spannung, die den von der Regelung gestellten hohen Genauigkeitsanforderungen entspricht. Außerdem läßt sich der Tachogenerator mit relativ kleinen Abmessungen ausführen.

3 Patentansprüche
2 Figuren

0203460

## Patentansprüche

1) Kollektorloser Tachogenerator mit einem dauermagneterregten Läufer (1) und einer mehrphasigen Ständerwicklung (5), die mit einer elektronischen, durch magnetfeldempfindliche Rotorlagegeber (9) gesteuerten Kommutierungseinrichtung verbunden ist,
d a d u r c h   g e k e n n z e i c h n e t ,
daß die Spulen ($U_1$ bis $U_3$, $V_1$ bis $V_3$, $W_1$ bis $W_3$) der Ständerwicklung (5) auf einem aus amagnetischem Material bestehenden Träger (4) angeordnet sind, der mit dem Rückschlußjoch (6) des Ständers verbindbar ist, daß sich das Rückschlußjoch (6) und die Dauermagnete (2) mindestens auf einer Seite in axialer Richtung über den Wickelkopf (7) der Ständerwicklung (5) hinaus erstrecken und die Rotorlagegeber (9) vor dem betreffenden Wickelkopf (7) im Luftspalt (8) zwischen dem Rückschlußjoch (6) und den Dauermagneten (2) des Läufers (1) angeordnet sind, daß ferner an dem Träger (4) Abstützelemente (16, 19) vorgesehen sind, durch die für jede Spule ($U_1$ bis $U_3$, $V_1$ bis $V_3$, $W_1$ bis $W_3$) eine gleichlange Ausbildung der beiden induzierten Spulenseiten (12, 13; 14, 15; 17, 18) sichergestellt ist.

2) Tachogenerator nach Anspruch 1,
d a d u r c h   g e k e n n z e i c h n e t ,
daß am Umfang des Trägers (4) radial vorstehende, entsprechend der erforderlichen Spulenweite voneinander beabstandete Stege (11) vorgesehen sind, um die die einzelnen Spulen ($U_1$ bis $U_3$, $V_1$ bis $V_3$, $W_1$ bis $W_3$) herumgewickelt sind, daß ferner mindestens auf der in dem Luftspalt (8) liegenden Wickelkopfseite an den Stirnseiten der Stege (11) die Länge der jeweiligen Spulenseite (15 bzw. 18) bestimmende Vorsprünge (16 bzw. 19) ausgebildet sind.

Ml 2 Th / 24. 05.1985

0203460

3) Tachogenerator nach Anspruch 1 oder 2, d a d u r c h  g e k e n n z e i c h n e t, daß die Windungszahl der zu einer Phase (z.B. U) gehörenden Spulen ($U_1$ bis $U_3$) zu der Windungszahl der zu einer anderen Phase (z.B. V bzw. W) gehörenden Spulen ($V_1$ bis $V_3$ bzw. $W_1$ bis $W_3$) im umgekehrten Verhältnis wie die Länge der induzierten Spulenseiten (12, 13) der zu der einen Phase (U) gehörenden Spulen ($U_1$ bis $U_3$) zu der Länge der induzierten Spulenseiten (14, 15 bzw. 17, 18) der zu der anderen Phase (V bzw. W) gehörenden Spulen ($V_1$ bis $V_3$ bzw. $W_1$ bis $W_3$) steht.

0203460

FIG 1

85 P 3185

0203460

W3  U1  5  V1  5  16  W1  19  U2  V2  16  W2  19  U3  V3  W3

12  18  14  13  17  15  18  11  12  14  13  17  15

11  11  11  11

16  19  4  16  19

**FIG 2**

Europäisches
Patentamt

**EUROPÄISCHER RECHERCHENBERICHT**

0203460
Nummer der Anmeldung

EP 86 10 6560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 331 754 (PAPST-MOTOREN) <br> * Seite 9, Zeilen 10-18, Figur 1 * <br><br> --- | 1 | G 01 P 3/46 |
| A | US-A-3 809 997 (KLEIN et al.) <br> * Spalte 3, Zeilen 8-42; Figur 1 * <br><br> --- | 1,2 | |
| A | CH-A- 303 036 (SVENSKA ACKUMULATOR) <br> * Seite 2, Zeilen 10-15; Figur 2 * <br><br> ----- | 3 | |

| RECHERCHIERTE SACHGEBIETE (Int. Cl.4) |
|---|
| G 01 P <br> H 02 K |

Der vorliegende Recherchenbericht wurde für alle Patentansprüche erstellt.

| Recherchenort | Abschlußdatum der Recherche | Prüfer |
|---|---|---|
| DEN HAAG | 16-07-1986 | HANSEN P. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82